# EUROPÄISCHE PATENTSCHRIFT

(11) **EP 1 320 453 B1**
(45) Veröffentlichungstag und Bekanntmachung des Hinweises auf die Patenterteilung: **19.01.2005**
(21) Anmeldenummer: 01985685.5
(22) Anmeldetag: 28.09.2001
(51) Int. Cl.: B29C 47/50, B29C 47/64, B29C 47/38

(54) **SCHNECKENEXTRUDER-ZAHNRADPUMPEN-ANORDNUNG FÜR HOCHVISKOSE MEDIEN**
SCREW EXTRUDER AND GEAR PUMP ARRANGEMENT FOR HIGHLY VISCOUS MEDIA
ENSEMBLE POMPE A ENGRENAGES-EXTRUDEUSE A VIS POUR SUBSTANCES DE VISCOSITE ELEVEE

(30) Priorität: 28.09.2000 DE 10049730; 21.11.2000 DE 10058918
(43) Veröffentlichungstag der Anmeldung: 25.06.2003
(73) Patentinhaber: Berstorff GmbH, 30625 Hannover (DE)
(72) Erfinder: UPHUS, Reinhard, 30419 HANNOVER (DE)
(74) Vertreter: Meissner, Peter E., Dipl.-Ing.
(86) Internationale Anmeldenummer: PCT/DE2001/003801
(87) Internationale Veröffentlichungsnummer: WO 2002/026471

(56) Entgegenhaltungen:
- EP-A- 0 642 913
- WO-A-00/53390
- DE-A- 2 146 095
- DE-C- 3 712 749
- US-A- 3 771 774

## Beschreibung

Die Erfindung betrifft eine Schneckenextruder-Zahnradpumpen-Anordnung für hochviskose Medien.

Aus der DE-A 21 00 403 ist eine Hydraulikpumpe bekannt, die in der Form eines Planetengetriebes mit einem Sonnenrad, mehreren an einem Planetenträger drehbar gelagerten Planetenrädern und einem Hohlrad ausgestattet ist, wobei sämtliche Räder eine Verzahnung aufweisen. Zwischen den Planetenrädern und dem Hohlrad, die miteinander kämmen, sowie zwischen den Planetenrädern und dem Sonnenrad, die ebenfalls miteinander kämmen, sind abwechselnd Saug- und Druckraumelemente gebildet, die durch bogenförmige Scheidewände des Planetenträgers, der im übrigen die Zwischenräume zwischen den Zahnräder ausfüllt, abgedichtet sind. Die Flachseiten der Planetenräder, des Hohlrads und des Sonnenrads liegen jeweils dicht auf zwei im Abstand voneinander angeordneten ebenen Gehäusewänden auf, die mit Wanddurchbrüchen versehen sind, welche die einzelnen Saug- und Druckraumelemente zwischen den Zahnrädern mit einem mit einer Hydraulikzuleitung versehenen und als Sammler fungierenden Saugraum bzw. mit einem mit einer Hydraulikableitung versehenen und ebenfalls als Sammler fungierenden Druckraum verbinden. Bei dieser bekannten Zahnradpumpe, die als Planetenradpumpe zu bezeichnen ist, ist der Planetenträger vorzugsweise fest, während das Sonnenrad und das Hohlrad umlaufen. Für eine Förderung hochviskoser Medien ist eine solche Pumpe im Grundsatz wenig geeignet, weil sie mit einem erheblichen Vordruck gespeist werden müsste und somit nicht selbstreinigend wäre.

Eine ähnliche Zahnradpumpe, die aus der DE 36 31 527 C1 bekannt ist, erlaubt eine drehzahlunabhängige Variierung ihrer Fördermenge. Die Pumpe weist wiederum verzahnte Planentenräder, einen Planententräger und ein verzahntes Hohlrad sowie ein verzahntes Sonnenrad auf, die außen von einem Pumpengehäuse eingeschlossen sind. Zur Veränderung der Fördermenge kann unabhängig von der Drehzahl des angetriebenen Sonnenrads wahlweise die Umlaufbewegung des Planententrägers oder die Drehbewegung des Hohlrads stillgesetzt werden. Der Planententräger ist mit einer mehrere Eintrittsöffnungen aufweisenden Eingangsdichtwand und einer davon axial beabstandeten, mehrere Austrittsöffnungen aufweisenden Ausgangsdichtwand versehen, die drehbar und abgedichtet in dem zylindrischen Pumpengehäuse gelagert sind. Im Pumpengehäuse ist in Förderrichtung vor der Eingangsdichtwand ein Saugraum und in Förderrichtung hinter der Eingangsdichtwand ein Druckraum angeordnet. Der Saugraum erstreckt sich jeweils durch die Eintrittsöffnungen in einzelne Saugraumelemente, die bis zur Ausgangsdichtwand reichen, während der Druckraum sich durch die Austrittsöffnungen in einzelne Druckraumelemente erstreckt, die bis zur Eingangsdichtwand reichen. Die Saugraumelemente und die Druckraumelemente sind jeweils in den Zwischenräumen zwischen einem Planetenrad, dem Hohlrad und dem Sonnenrad angeordnet und sind gegeneinander angedichtet durch die Eingangs- und die Ausgangsdichtwand sowie durch zwischenraumfüllende Teile des zwischen der Eingangs- und der Ausgangsdichtwand angeordneten, massiv ausgeführten Planetenträgers. Die Zuleitung für das zu fördernde Medium verläuft in Form einer Längsbohrung, die in eine Querbohrung übergeht, innerhalb der durch die Wand des Pumpengehäuses geführten Drehachse des Planetenträgers, während die Ableitung für das geförderte Medium in entsprechender Weise durch die Drehachse des Sonnenrads geführt ist. Wegen der kleinen Durchmesser der Bohrungen und der kleinen Querschnittsflächen der Eintrittsund Austrittsöffnungen wäre eine solche Pumpe zur Förderung hochviskoser Medien ungeeignet und wäre nicht selbstreinigend.

Eine andere als Planetenradpumpe arbeitende Zahnradpumpe ist aus der US 3 870 437 bekannt. Das zu fördernde Volumen wird hierbei jeweils in den Zwischenraum zwischen dem Sonnenrad und dem Hohlrad sowie zwei unmittelbar benachbarten Planetenrädem eingeschlossen. Um die Größe dieses Zwischenraums zur Erzeugung der Pumpwirkung während des Umlaufs der Planetenräder im Bereich der Ansaugstelle (Einströmbereich) kontinuierlich zu vergrößern und im Bereich der Druckzone (Abströmbereich) kontinuierlich zu verringern, weist diese Pumpe flexibel verformbare Zahnräder auf. Beispielsweise können das Hohlrad und das angetriebene Sonnenrad exzentrisch zueinander angeordnet und flexibel Planetenräder eingesetzt werden, die sich der unterschiedlichen Spaltbreite zwischen Hohlrad und Sonnenrad durch Verformung (Ovalität) anpassen können.

Gemeinsames Merkmal dieser bekannten Planetenradpumpen ist es, dass nicht nur die Planetenräder sondern auch das Hohlrad und das Sonnenrad jeweils Verzahnungen aufweisen, die miteinander im Sinne eines Umlaufgetriebes in kämmendem Eingriff stehen.

Bei der Verarbeitung von Kunststoffschmelzen oder Kautschukmischungen sind bisher Zahnradpumpen gebräuchlich, die im Sinne eines Stirnradgetriebes arbeiten und meistens an einen Schneckenextruder angeschlossen sind. Im Regelfall weist die Zahnradpumpe dabei einen von dem Antrieb der Extruderwelle oder -wellen separaten Antrieb auf. Ein solcher Extruder ist beispielsweise aus der EP 0 508 080 A2 bekannt. Dabei fördert eine Extruderschnecke das zu extrudierende Material unmittelbar in den Zwickelbereich der Zahnradpumpe, die zwei miteinander kämmende Stirnräder aufweist. Diese Art der Zahnradpumpe ist nicht selbstreinigend und erfordert daher meistens beim Wechseln des jeweils zu verarbeitenden Materials aufwendige Demontage- und Reinigungsarbeiten, um keine Qualitätseinbußen nach einem Materialwechsel hinnehmen zu müssen.

Aus der EP 0 564 884 A1 ist ein Doppelschneckenextruder bekannt, dessen Schneckenwellen in einem Abschnitt zur Druckerhöhung der zu verarbeitenden Schmelze jeweils mit einem der beiden Stimräder einer Zahnradpumpe bestückt sind, so dass ein direkter Antrieb der Zahnräder durch die Schneckenwellen erfolgt. Durch zwei stirnseitige, d.h. senkrecht zur Längsachse der Schneckenwellen verlaufende Abdichtwände, die mit einem Durchtrittsfenster für die Schmelze zur Eintrittsseite bzw. zur Austrittsseite versehen sind, werden Ansaugraum und Druckraum voneinander getrennt. Auch diese Zahnradpumpe ist nicht selbstreinigend. Ihr Fördervolumen kann nicht unabhängig von der Drehzahl der Schneckenwellen verändert werden.

Schließlich ist aus der EP 0 642 913 A1 ein Einschneckenextruder bekannt, der vor seinem letzten Schneckenabschnitt eine Zahnradpumpe in der Bauart eines Stimradgetriebes aufweist. Eines der beiden Stimräder der Zahnradpumpe ist unmittelbar auf der Schneckenwelle des Schneckenextruders befestigt und wird durch diese angetrieben. Das Extrudergehäuse weist eine seitliche Ausbuchtung auf, in der das zweite Stirnrad der Zahnradpumpe gelagert ist. An den Flachseiten der Stimräder liegt jeweils eine Dichtwand an, die formschlüssig im Gehäuse des Extruders gelagert ist. Die Abdichtwände oder das Extrudergehäuse sind jeweils mit einem saugseitigen bzw. druckseitigen Durchtrittsfenster für das zu extrudierende Material versehen. Auch bei diesem bekannten Extruder ist keine Selbstreinigung gewährleistet.

Aufgabe der Erfindung ist es, eine Schneckenextruder-Zahnradpumpen-Anordnung vorzuschlagen, die in besonderer Weise zur Verarbeitung hochviskoser Materialien geeignet ist und weitgehend selbstreinigend arbeitet.

Gelöst wird diese Aufgabe mit den Merkmalen des Patentanspruchs 1.

Vorteilhafte Weiterbildungen dieser Zahnradpumpe ergeben sich aus den abhängigen Unteransprüchen.

Die vorliegende Erfindung stellt eine Schneckenextruder-Zahnradpumpem-Anordnung zur Verfügung, bei der die Zahnradpumpe im Prinzip entsprechend einem Planetengetriebe aufgebaut ist und in besonderer Weise zur Förderung hochviskoser Medien wie Kunststoffschmelzen und Kautschukmischungen geeignet ist und den Vorteil einer weitgehenden Selbstreinigung besitzt, da die Einspeisung des zu fördernden Mediums ohne nennenswerten Vordruck erfolgen kann. Die Erfindung geht aus von einer Planetenradpumpe, die einen Planetenträger aufweist, der mit mindestens einem drehbar in dem Planetenträger gelagerten Planetenrad bestückt ist. Ferner weist diese Planetenradpumpe zwei weitere Funktionselemente auf, die mit dem mindestens einen Planetenrad im Sinne eines Sonnenrads bzw. eines Hohlrads zusammenwirken. Darüber hinaus sind ein Pumpengehäuse, das den Planetenträger mit den Planetenrädern und den beiden vorgenannten Funktionselementen von außen umgibt, sowie eine Eingangs- und eine Ausgangsdichtwand vorgesehen. Die Eingangsdichtwand ist mit dem Planetenträger drehfest verbunden und weist mindestens eine Eintrittsöffnung für das zu fördernde Medium auf. In entsprechender Weise ist die Ausgangsdichtwand mit dem Planetenträger drehfest verbunden und mit mindestens einer Austrittsöffnung für das zu fördernde Medium versehen. Außerdem weist diese Zahnradpumpe einen Saugraum und einen Druckraum auf, die von dem Pumpengehäuse umschlossen und gegeneinander abgedichtet sind, wobei der Saugraum in Förderrichtung vor der Eingangsdichtwand angeordnet ist und sich durch die mindestens eine Eintrittsöffnung hindurch in mindestens ein Saugraumelement entlang des mindestens einen Planetenrads bis zu der Ausgangsdichtwand hin erstreckt und wobei der Druckraum in Förderrichtung hinter der Ausgangsdichtwand angeordnet ist. Erfindungsgemäß ist bei einer derartigen Zahnradpumpe vorgesehen, dass jeweils nur eines der beiden als Sonnenrad oder als Hohlrad wirkenden Funktionselemente eine mit dem mindestens einen Planetenrad kämmende Verzahnung aufweist, wohingegen das andere Funktionselement mindestens einen Dichtbereich besitzt, der glattwandig und so ausgeführt ist, dass er über einen Teil des Umfangs und über die Länge des mindestens einen Planetenrads gleitbar dichtend an diesem anliegt. Weiterhin sieht die Erfindung vor, dass das Funktionselement, welches den mindestens einen Dichtbereich aufweist, drehfest mit dem Planetenträger verbunden ist, also dieselben Bewegungen ausführt. Um eine abgedichtete Trennung des mindestens einen Saugraumelements von dem mindestens einen Druckraumelement zu gewährleisten, sieht die Erfindung als weiteres wesentliches Merkmal vor, dass in Umfangsrichtung versetzt zu dem mindestens einen Planetenrad mindestens eine sich von der Eingangsdichtwand bis zur Ausgangsdichtwand erstreckende Trennwand angeordnet ist, die mit dem Funktionselement, welches den mindestens einen glattwandigen Dichtbereich aufweist, drehfest und dichtend verbunden ist und sich in radialer Richtung bis zum Kopfkreis der Verzahnung des die Verzahnung aufweisenden Funktionselements erstreckt.

In einer zweckmäßigen Ausführungsform ist vorgesehen, dass sich der Druckraum durch die mindestens eine Austrittsöffnung hindurch in mindestens ein Druckraumelement entlang des mindestens einen Planetenrads bis zu der Eingangsdichtwand hin erstreckt. Das bedeutet, dass das Druckraumelement und das Saugraumelement sich jeweils bezüglich des Planetenrads gegenüber liegen.

In einer anderen Ausführungsform ist vorgesehene, dass das Volumen des jeweiligen Druckraumelements minimiert und vorzugsweise zu Null wird. Das bedeutet, dass die Trennwand jeweils über die gesamte axiale Länge des jeweiligen Planetenrads großflächig über den Umfang des Planetenrads an dessen Verzahnung dichtend anliegt. Bei dieser Ausführung ist eine besonders effektive Selbstreinigung der Zahnradpumpe gewährleistet.

Das Funktionselement, welches in entsprechender Weise wie das mindestens eine Planetenrad verzahnt ist und mit diesem kämmt, ist vorzugsweise das Hohlrad. Da dieses feststehend angeordnet werden kann, ist es zweckmäßigerweise einstückig mit dem Pumpengehäuse ausgeführt oder zumindest drehfest in dem das Hohlrad umgebenden Pumpengehäuse gelagert. In diesem Fall läuft der Planetenträger mit dem dem Sonnenrad entsprechenden Funktionsteil um und ist vorzugsweise einstückig mit diesem ausgeführt. Ein verzahntes Sonnenrad, wie bei einem üblichen Planetenradgetriebe, gibt es hierbei also nicht. Das mindestens eine Planetenrad kämmt dabei also nicht mit einer Verzahnung eines solchen Sonnenrads, sondern bewegt sich gleitbar abgedichtet im mindestens einen Dichtungsbereich des sonst als Sonnenrad fungierenden Funktionsteils.

Selbstverständlich ist es möglich, auch eine umgekehrte Anordnung zu wählen, bei der ein verzahntes Sonnenrad benutzt wird, während das als Hohlrad fungierende Funktionsteil keine Verzahnung aufweist, sondern mit dem mindestens einen Dichtbereich versehen ist. In diesem Fall kann das "Hohlrad" wie der Planetenträger stillstehen. Wegen der einfacheren Konstruktion wird aber die vorgenannte Lösung mit verzahntem Hohlrad und mit unverzahntem "Sonnenrad" bevorzugt.

Zweckmäßigerweise werden mehrere Planetenräder, Trennwände, Eintritts- und Austrittsöffnungen vorgesehen, also jeweils mindestens zwei, vorzugsweise jeweils mindestens vier. Die Verzahnung der Planetenräder und des damit kämmenden Funktionsteils (vorzugsweise also das Hohlrad) kann geradverzahnt sein, wird aber vorzugsweise schräg verzahnt ausgeführt. Dies ermöglicht eine besonders gleichmäßige Förderung der erfindungsgemäßen Planetenradpumpe.

Die Planetenräder und das damit kämmende Funktionsteil können auch pfeilverzahnt ausgeführt sein. In diesem Fall wird aber die Demontage erschwert. Durch eine geteilte Ausführung z.B. des Hohlrads lässt sich aber selbst unter diesen erschwerten Bedingungen noch eine Demontage bewerkstelligen.

In einer weiteren zweckmäßigen Ausführungsform sieht die Erfindung vor, dass die Trennwände in axialer Richtung in entsprechender Weise, wie die Schrägverzahnung wendelförmig verlaufen. Dabei empfiehlt es sich, die Trennwände einstückig mit dem den mindestens einen Dichtbereich ausweisenden Funktionselement, also vorzugsweise mit dem "Sonnenrad" einstückig auszubilden. Auch der Planetenträger wird in diesem Fall zweckmäßigerweise einstückig mit dem "Sonnenrad" ausgebildet.

Die Planetenräder werden zweckmäßig in der Eingangsdichtwand und der Ausgangsdichtwand gelagert, so dass diese Teil des Planetenträgers sind. Selbstverständlich ist auch eine separate Ausbildung dieser Bauteile möglich. Damit die Planetenräder leicht montiert und demontiert werden können, ist es vorteilhaft, lediglich eine der beiden Dichtwände, vorzugsweise die Eingangsdichtwand, einstückig mit dem Planetenträger auszubilden und die andere Dichtwand als separates Bauteil zu belassen.

Um die Zahnradpumpe leicht in einem Gehäuse eines Schneckenextruders unterbringen zu können und eine einfache Demontierbarkeit zu gewährleisten, empfiehlt es sich, den Außendurchmesser der Eingangsdichtwand ungleich, d.h. vorzugsweise kleiner zu gestalten als den Außendurchmesser der Ausgangsdichtwand. Dadurch lässt sich die Zahnradpumpe, die meistens am Förderende eines Schneckenextruders mit diesem verbunden wird, leicht vom Kopfende des Extruders her aus dem Gehäuse herausziehen.

Um eine Veränderung des Fördervolumens der Zahnradpumpe während des Betriebs zu ermöglichen, sieht eine weitere bevorzugte Ausführungsform der Erfindung vor, den Planetenträger zusammen mit dem dem Sonnenrad entsprechenden Funktionsteil und der Eingangs- und der Ausgangsdichtwand innerhalb des Pumpengehäuses axial gegenüber dem verzahnten Hohlrad um einen Verschiebeweg w verschieblich anzuordnen. Dadurch kann die Länge des Zahneingriffs zwischen dem Hohlrad und den Planetenrädem und damit das Verdrängungsvolumen der Zähne variiert werden. Damit keine unerwünschten Undichtigkeiten zwischen dem Saugraum und dem Druckraum entstehen, empfiehlt es sich, die abgedichtet im Pumpengehäuse gleitbar gelagerte Eingangsdichtwand, die sich beim Verschieben in den Verzahnungsbereich des Hohlrads hinein bewegt, in ihrer axialen Dicke d (d.h. in Verschieberichtung gesehen) größer zu wählen als den maximalen Verschiebeweg w. Dadurch bleibt die Dichtung zwischen dem Pumpengehäuse und der Eingangsdichtwand unverändert erhalten. Es kann aber auch vorgesehen werden, eine bewusste Undichtigkeit zwischen Druckraum und Saugraum durch eine geringfügige Verschiebung einzustellen, um die Förderleistung der Pumpe zu drosseln.

Die Drosselung der Förderleistung während des Betriebs ist im Unterschied zu bekannten Planetenradpumpen ohne einen ständig erforderlichen zweiten Antriebs für eines der Funktionselemente (Hohlrad oder Sonnenrad) möglich, da lediglich für die kurze Zeit der axialen Verstellung der Zahnradpumpe ein Antrieb mit einem soweit äußerst geringfügigen Energieverbrauch benötigt wird. Durch die Verstellbarkeit der Förderleistung der Zahnradpumpe wird eine Anpassung an die Verarbeitung unterschiedlicher Materialien möglich.

In fertigungstechnischer Hinsicht kann es empfehlenswert sein, die Planetenräder und/oder das damit kämmende Hohlrad bzw. Sonnenrad im oberflächennahen Bereich der Verzahnung weichelastisch auszuführen. In diesem Fall können gegenüber der exakten Verzahnung fertigungstechnisch relativ grob tolerierte metallische Zahnradgrundkörper gefertigt werden, die kleinere Abmessungen als die Sollabmessungen der fertigen Verzahnung aufweisen und anschließend mit einer elastischen Umhüllung, insbesondere einer Umhüllung aus Gummi oder einem thermoplastischen Elastomer versehen werden. Da diese Umhüllung ausgezeichnete Elastizitätseigenschaften aufweist, sind auch die Anforderungen an die in dieser Weise fertiggestellte Verzahnung geringer als bei einer rein metallischen Verzahnung. Übermaße können durch Verformung gleichsam kompensiert werden. Durch eine Gummiummantelung mir leichtem Übermaß können die Zahnhohlräume des Hohlrads vollständig ausgereinigt werden.

In einer weiteren Variante sieht die Erfindung vor, die Verzahnung des Hohlrads oder der Planetenräder alternierend oder abschnittsweise mit Zähnen unterschiedlicher Höhe auszuführen, also beispielsweise ein Planetenrad einzusetzen, bei dem die Hälfte der Zähne eine normale Größe und die andere Hälfte der Zähne eine verringerte Größe aufweist, wobei sich die beiden Zahngrößen über den Umfang ständig abwechseln. Wenn die Pumpe mehrere Planetenräder aufweist, können auch unterschiedliche Planetenräder verwendet werden, d.h. Planetenräder mit normaler Zahnhöhe und andere Planetenräder mit verringerter Zahnhöhe. Der damit bewirkbare Effekt ist darin zu sehen, dass durch teilweise verringerte Zahnhöhe eine Kompaktierung des Materials erfolgen kann, welches in den Zahnlücken des mit dem jeweiligen Zahnrad zusammenwirkenden Gegenrades enthalten ist. Das kompaktierte Material würde dann erst beim Zusammentreffen mit einem vollausgebildeten Zahn aus der Zahnlücke ausgedrückt und gefördert werden.

Bei einem Planetenrad mit durchgehend verringerter Zahnhöhe wird also das in den Zahnlücken des Hohlrads befindliche Material zunächst komprimiert und erst durch ein nachfolgendes Planetenrad, dessen Zähne voll ausgebildet sind, unter Dehn - und Scherströmungen aus der Zahnlücke jeweils herausgedrückt. Bei einer Zahnradpumpe mit vier Planetenrädem werden jeweils zwei gegenüberliegende mit einer reduzierten Zahnhöhe und die beiden anderen sich gegenüberliegenden Planetenräder mit normaler Zahnhöhe ausgebildet. Die in der Zahnradpumpe vorliegenden Zwangsströmungen begünstigen ein kontinuierliches Homogenisieren und Mischen (z.B. Füllstoffe) des zu verarbeitenden Materials.

Die Zahngeometrie der Verzahnung von Planetenrädem und Hohlrad ist im Grundsatz beliebig. Es muss lediglich sichergestellt sein, dass die Zähne des einen Zahnrads in die Zahnlücke des jeweils anderen Zahnrads so eingreifen, dass ein abdichtender Gleitkontakt mit den beiden die jeweilige Zahnlücke des anderen Zahnrads begrenzenden Zähnen besteht.

Erfindungsgemäß werden eine oder mehrere Zahnradpumpen in der Bauart eines Planetengetriebes, insbesondere Zahnradpumpen, in einem Schneckenextruder zur Förderung fließfähiger Medien wie insbesondere Kunststoffschmelzen und Kautschukmischungen verwendet, wobei der Schneckenextruder eine oder auch mehrere Schneckenwellen aufweisen kann und die Schneckenwelle bzw. -wellen jeweils mechanisch mit dem Antrieb der Zahnradpumpe gekoppelt sind, so dass es keines separaten Pumpenantriebs bedarf. Somit ist auch keine eigene Steuerung für den Antrieb der Zahnradpumpe erforderlich.

Üblicherweise wird das Pumpengehäuse unmittelbar an das Gehäuse des Schneckenextruders angeschlossen bzw. ist vorzugsweise Bestandteil des Extrudergehäuses.

Mit besonderem Vorteil wird die Gangzahl der Schneckenwelle bzw. -wellen am Förderende jeweils gleich der Zahl der Planetenräder der daran angeschlossenen Zahnradpumpe gewählt. Die Gangzahl muss aber keineswegs über die gesamte Schneckenlänge konstant sein. Eine vorzugsweise Verwendung der erfindungsgemäßen Zahnradpumpen sieht vor, die Gangzahl der Schneckenwellen in dem vor dem Förderende liegenden Abschnitt der Schneckenwellen jeweils halb so groß wie am Förderende zu wählen.

Bei Einsatz einer Planetenradpumpe mit Schrägverzahnung ist es vorteilhaft, die Neigung der Wendelung der Gänge der Schneckenwellen bezogen auf die Förderrichtung des Schneckenextruders jeweils in entgegengesetzter Richtung vorzusehen wie die Neigung der Verzahnung.

Um die Förderleistung des Schneckenextruders mit der Planetenradpumpe ohne Änderung der Antriebsdrehzahl beeinflussen zu können, empfiehlt es sich, die Schneckenwelle jeweils zusammen mit dem Planetenträger sowie dem Sonnenrad und der Eingangs- und Ausgangsdichtwand axial verschieblich anzuordnen. Durch axiales Verschieben der Schneckenwelle, die mit dem Planetenträger mechanisch drehfest gekoppelt ist, kann so die Förderleistung der Zahnradpumpe beeinflusst werden, da in der zuvor beschriebenen Weise das Verdrängungsvolumen und/oder die gewollte Leckage zwischen Saugraum und Druckraum gesteuert werden.

Ein wesentlicher Vorteil bei einer Kombination eines Schneckenextruders mit der Zahnradpumpe ist darin zu sehen, dass wegen der guten Druckaufbaueigenschaften bei gleichzeitiger Nichtnotwendigkeit eines nennenswerten Förderdrucks zur Einspeisung in die Zahnradpumpe die Extruderschnecke vor der Zahnradpumpe sehr kurz ausgeführt werden kann. Vorzugsweise beträgt die Länge der Extruderschnecke den zwei- bis fünffachen Wert des Schneckendurchmessers.

Eine besonders vorteilhafte Verwendung der Planetenradpumpe ergibt sich in einem Schneckenextruder insbesondere zur Verarbeitung von Kautschukmischungen, wenn hinter der Zahnradpumpe ein Stiftzylinderextruderbereich, wie er beispielsweise aus der DE 40 39 942 A1, deren Offenbarungsgehalt insoweit in die vorliegende Anmeldung einbezogen wird, bekannt ist. Die Planetenradpumpe kann dabei den für den Stiftzylinderextruderbereich vorteilhaften hohen Vordruck leicht aufbauen.

In einer weiteren vorteilhaften Anwendung ist vorgesehen, dass hinter einem solchen Stiftzylinderextruderbereich noch ein Vakuumentgasungsbereich angeschlossen wird, dem am Ende des Extruders noch eine zweite Planetenradpumpe folgt, um den erforderlichen Extrusionsdruck am Extruderausgang zu liefem.

Nachfolgend wird die Erfindung anhand der in den Figuren dargestellten Ausführungsbeispiele näher erläutert. Die Figuren zeigen in schematischer Darstellung:
- Fig. 1: Einen Längsschnitt durch einen Einschneckenextruder mit Planetenradpumpe,
- Fig. 2: den Längsschnitt gemäß Fig. 1 in Form einer Abwicklung,
- Fig. 3a-d: Querschnitte gemäß den Linie A-A, B-B, C-C und D-D in Fig. 1,
- Fig. 4: eine Abwandlung des Schneckenextruders gemäß Fig. 1 durch axiale Verschieblichkeit der Schneckenwelle,
- Fig. 5: einen Schneckenextruder mit Planetenradpumpe und daran angeschlossenem Stiftzylinderextruderbereich,
- Fig. 6: einen Schneckenextruder mit zwei hintereinandergeschalteten Planetenradpumpen, Stiftzylinderextruderbereich und Vakuumentgasungsbereich,
- Fig. 7: ein Schnittbild eines Planetenrads mit weichelastischer Umhüllung und
- Fig. 8: ein Planetenrad mit alternierend unterschiedlich hohen Zähnen.

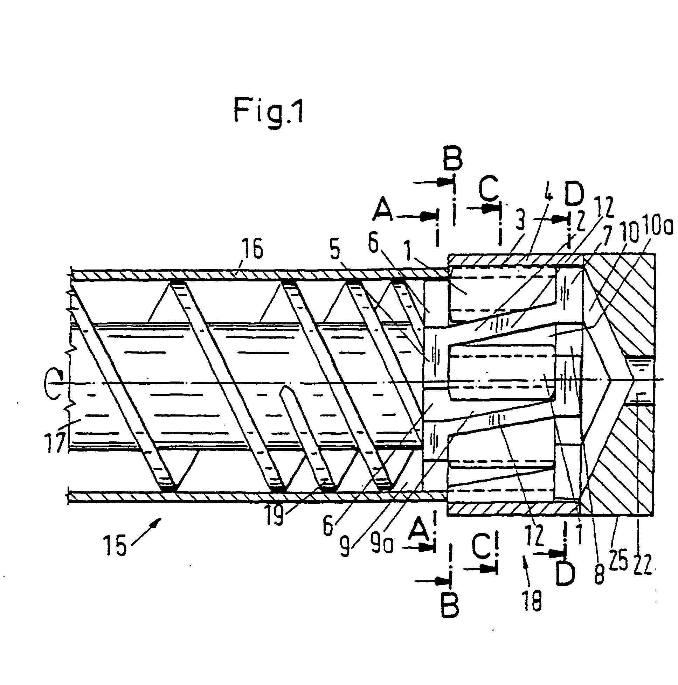

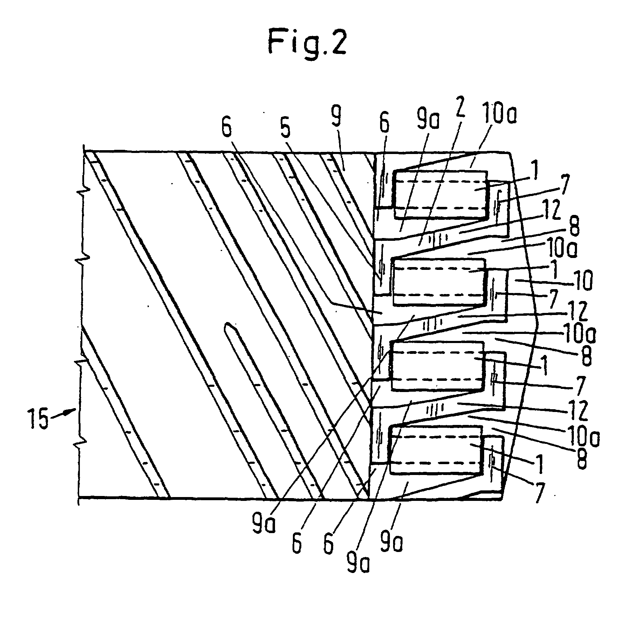

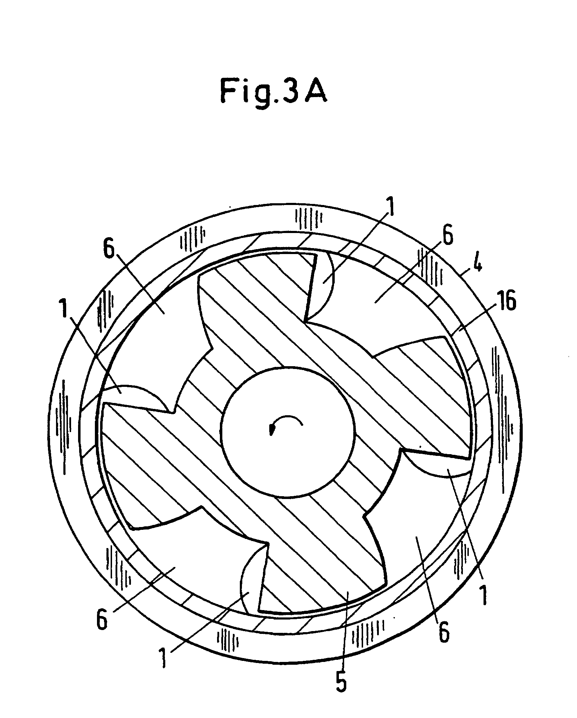

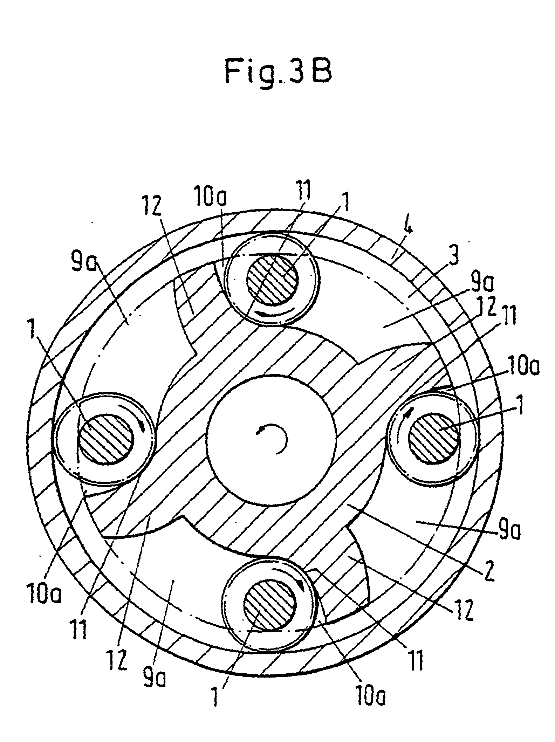

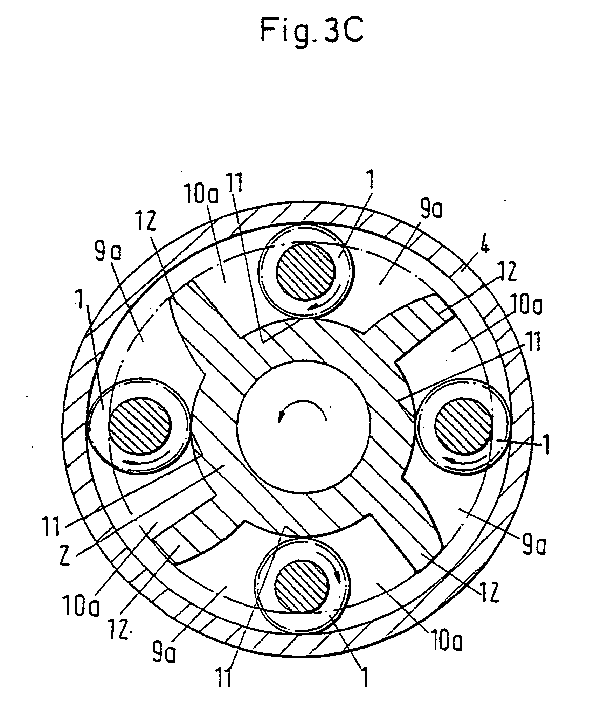

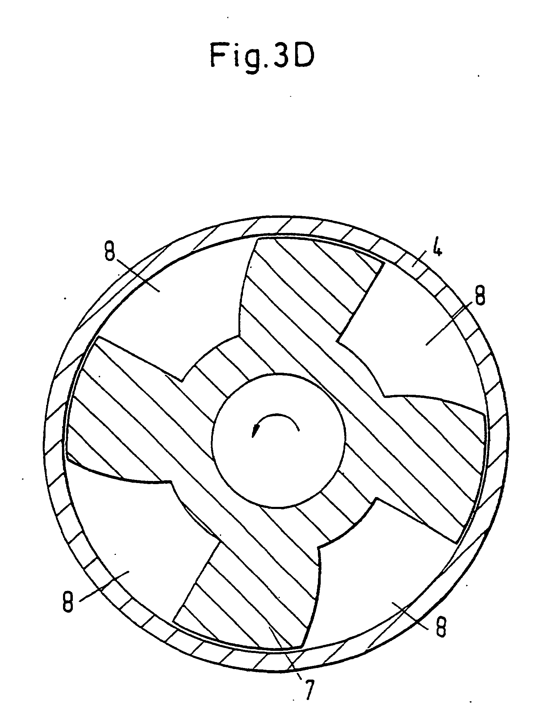

In den Figuren 1 bis 3d ist ein Schneckenextruder 15 in einem axialen Längsschnitt, mehreren Querschnitten und einer schematischen Abwicklung (Fig. 2) dargestellt. Der Schneckenextruder 15 besitzt eine Schneckenwelle 17, die in Förderrichtung gesehen zunächst 2-gängig ausgeführt ist und am Förderende 19 die doppelte Gangzahl aufweist, also 4-gängig ist. Die Schneckenwelle 17 ist von einem Extrudergehäuse 16 umgeben. In unmittelbarem Anschluss an das Förderende 19 ist eine Planetenradpumpe 18 vorgesehen, die ein im wesentlichen zylindrisches Pumpengehäuse 4 aufweist, innerhalb dessen ein Planetenträger 2 mit vier drehbar darin gelagerten Planetenrädern 1 angeordnet ist. Im Bereich der Wand des Pumpengehäuses 4 ist auf der Innenseite ein verzahntes Hohlrad 3 vorgesehen, das in bevorzugter Ausführungsform der Erfindung einstückig mit diesem Teil des Pumpengehäuses 4 ausgeführt ist. Auf der linken Seite der Planetenräder 1 befindet sich eine Eingangsdichtwand 5, die abgedichtet und drehbar im Extrudergehäuse 16 gelagert ist. Diese Eingangsdichtwand 5 ist entsprechend der Anzahl der Planetenräder 1 mit vier Eintrittsöffnungen 6 versehen (Fig. 3a). Auf der rechten Seite der Planetenräder 1 ist eine Ausgangsdichtwand 7 angeordnet, die in entsprechender Weise mit vier Austrittsöffnungen 8 versehen ist (Fig. 3d). Auch die Ausgangsdichtwand 7 ist drehbar gelagert, und zwar im Pumpengehäuse 4. Links von der Eingangsdichtwand 5, also am Ende des 4-gängigen Teils der Schneckenwelle 17 befindet sich der Saugraum 9 der Zahnradpumpe 18, während sich ihr Druckraum 10 auf der rechten Seite der Ausgangsdichtwand 7 befindet. Der Saugraum 9 erstreckt sich durch die Eintrittsöffnungen 6 in Form von Saugraumelementen 9a entlang jeweils eines Planetenrads 1 bis zur Ausgangsdichtwand 7. In entsprechender Weise erstreckt sich jeweils auf der diametral gegenüberliegenden Seite eines Planetenrads 1 der Druckraum 10 in Form jeweils eines Druckraumelements 10a durch die Austrittsöffnungen 6 hindurch bis zur Eingangsdichtwand 5 (Fig. 1, 3b, 3c). Der Planetenträger 2, zu dem funktionell auch die Eingangsdichtwand 5 und die Ausgangsdichtwand 7 gehören, da diese die Lagerung der Planetenräder 1 aufnehmen, ist mit insgesamt vier Trennwänden 12 versehen, die sich im wesentlichen radial von einem mittigen Grundkörper aus zwischen den Planetenrädern 1 bis zur Verzahnung des Hohlrads 3 erstrecken. Aus Fig. 3b, c ist ersichtlich, dass die Planetenräder 1 jeweils in einem glattzylindrisch geformten Dichtbereich 11 gleitbar dichtend an den jeweils zugeordneten Trennwänden 12 bzw. dem mittigen Grundkörper des Planetenträgers 2 anliegen. Die Dichtwände 12 sind einstückig mit dem Planetenträger 2 ausgeführt. Die Planetenräder 1 befinden sich im Eingriff mit der Verzahnung des Hohlrads 3, so dass auch dort ein abgedichtetes Anlegen gegeben ist. Im Querschnitt gesehen sind somit die Saugraumelemente 9a jeweils durch eine Trennwand 12, den mittigen Grundkörper des Planetenträgers 2, ein zugeordnetes Planetenrad 1, welches dichtend an dem mittleren Grundkörper und in der Verzahnung des Hohlrads 3 anliegt, und durch einen Teil des Hohlrads 3 abgeschlossen. Entsprechendes gilt für die bezüglich der Achse der Planetenräder 1 diametral jeweils gegenüberliegenden Druckraumelemente 10a, die in der dargestellten Schnittposition der Fig. 3b in der Nähe der Eingangsdichtwand 5 nur einen sehr kleinen Querschnitt aufweisen. Die umgekehrten Größenverhältnisse ergeben sich bei einem entsprechenden Schnitt in der Nähe der Ausgangsdichtwand 7. Dort hätten die Saugraumelemente 9a die Größe der Druckraumelemente 10a in Fig. 3b. Entsprechend würde der Querschnitt des Druckraumelements 10a jeweils die Größe des Saugraumelements 9a in Fig. 3b aufweisen. Das bedeutet also, dass sich die Saugraumelemente 9a im Querschnitt von der Eintrittsöffnung 6 hin bis zur Ausgangsdichtwand 7 kontinuierlich verringern, während sich die gegenüberliegenden Druckraumelemente 10a von der Eingangsdichtwand 5 bis zu den Austrittsöffnungen 8 in der Ausgangsdichtwand 7 kontinuierlich im Querschnitt vergrößem. In der Mitte zwischen der Eingangsdichtwand 5 und der Ausgangsdichtwand 7 sind die Saugraumelemente 9a, wie Fig. 3c zeigt, im Querschnitt etwa gleich groß wie die Druckraumelemente 10a.

Das Volumen der Druckraumelemente 10a könnte bei Bedarf zur Steigerung der Selbstreinigungsfähigkeit der Planetenradpumpe 18 auch bis auf Null reduziert werden, so dass dann die Trennwände 12 jeweils unmittelbar auf der Verzahnung der jeweiligen Planetenräder 1 an der den Saugraumelementen 9a gegenüber liegenden Seite dichtend aufliegen würden und das zu fördernde Material unmittelbar aus den Zahnlücken der Verzahnungen der Planetenräder 1 und des Hohlrads 3 durch die Austrittsöffnungen 8 in den Druckraum 10 gelangen würde.

Während der mittlere Grundkörper des Planetenträgers 2, der in einem üblichen Planetenradgetriebe dem Sonnenrad entspricht, keinerlei Verzahnung aufweist, ist das Hohlrad 3 ebenso wie die Planetenräder 1 vorteilhaft mit einer Schrägverzahnung ausgestattet. Ebenfalls in bevorzugter Weiterbildung der Erfindung sind die Trennwände 12 wendelförmig, d.h. bezüglich der Längsachse des Schneckenextruders 15 schräg angestellt, wobei die Neigung dieser Schräge in die umgekehrte Richtung weist wie die Neigung der Gänge der Schneckenwelle 17 (Fig. 1). Der Austritt aus dem dargestellten Extruder ist mit dem Bezugszeichen 22 bezeichnet.

Man erkennt aus dem Schnittbild der Fig. 1, dass das Pumpengehäuse 4 einen vergrößerten Durchmesser gegenüber dem Extrudergehäuse 16 aufweist. Das Extrudergehäuse 16 besitzt einen Innendurchmesser, der geringfügig kleiner ist als der Durchmesser des Kopfkreises der Verzahnung des Hohlrads 3, so dass die rechte Stirnwand des Extrudergehäuses 16 in der Nähe der eingezeichneten Schnittlinie B-B die Querschnittsflächen der Zahnlücken der Verzahnung des Hohlrads 3 vollständig abdeckt. Entsprechendes gilt für die Zahnlücken der Planetenräder 1, soweit diese sich im Bereich des Eingriffs mit der Verzahnung des Hohlrads 3 befinden. Im übrigen werden die Planetenräder 1 und der gesamte Zwischenraum bis auf die notwendigen Eintrittsöffnungen 6 von der Eingangsdichtwand 5 vollständig verschlossen (Fig. 3a). Entsprechendes gilt auf der anderen Seite der Planetenräder 1 in Bezug auf die Ausgangsdichtwand 7 und die Austrittsöffnungen 8 (Fig. 3d). Die Ausgangsdichtwand 7 weist einen Außendurchmesser auf, der dem Innendurchmesser des Pumpengehäuses 4 entspricht, so dass die Zahnlücken der Verzahnung des Hohlrads 3 an der rechten Stirnseite der Verzahnung vollständig durch die Ausgangsdichtwand 7 abgedichtet werden. Da der Außendurchmesser der Eingangsdichtwand 5 bewusst gewählt kleiner ist als der Kopfkreisdurchmesser der Verzahnung des Hohlrads 3 kann zum Zwecke der Demontage nach Entfernung eines Kopfstücks 25 die gesamte Einheit des Planetenträgers 2 mit den Planetenrädern 1 und den beiden Dichtwänden 5, 7 problemlos nach rechts aus dem Pumpengehäuse 4 herausgezogen werden.

Die Arbeitsweise des dargestellten Schneckenextruders ist wie folgt: Das zu verarbeitende Medium, beispielsweise die Schmelze eines thermoplastischen Kunststoffs, wird durch die Schneckenwelle 17 von links nach rechts in Richtung der Zahnradpumpe 18 gefördert. Aus den zunächst zwei Teilströmen, die sich entlang der 2-gängigen Schneckenwelle bewegen, werden am Förderende 19 durch die beiden zusätzlichen Schneckengänge vier Teilströme erzeugt. Die Schneckengänge enden jeweils, wie besonders deutlich aus der Abwicklung der Fig. 2 hervorgeht, an einer Eintrittsöffnung 6, münden also in ein Saugraumelement 9a. Da die Schneckenwelle 17 mechanisch mit dem Planetenträger 2 gekoppelt ist, führt dieser zusammen mit den ebenfalls daran angekoppelten Dichtwänden 5, 7 die gleichen Drehbewegungen aus. Die Schmelze gelangt, ohne dass es hierzu eines wesentlichen Vordrucks bedarf, durch die vergleichsweise großen Eintrittsöffnungen 6 in die einzelnen Sauraumelemente 9a. Durch die Trennwände 12 wird das Material der Schmelze entsprechend der eingezeichneten Drehrichtung in die Zahnlücken der Verzahnung des Hohlrads 3 hineingestrichen. Die Beförderung der Schmelze in das jeweils gegenüberliegende Druckraumelement 10a erfolgt an jedem Planetenrad 1 in zwei Teilströmen. Der eine Teilstrom wird in den Zahnlücken des jeweiligen Planetenrads 1 entlang der Dichtzonen 11 in das zugehörige Druckraumelement 10a geführt, während ein zweiter Massenstrom durch Herausquetschen der Schmelze aus den Zahnlücken des Hohlrads 3 infolge des Eingriffs der Verzahnung der Planetenräder 1 erzeugt wird. Auf diese Weise wird der am Pumpeneingang noch aus vier Teilströmen bestehende Gesamtstrom nunmehr in insgesamt acht Teilströme aufgeteilt, so dass die Planetenradpumpe zu einer Verbesserung der Materialmischung beitragen kann. Dadurch, dass das zu fördernde Material beim Umlaufen des Plantenträgers 2 von den radialen Trennwänden 12 in die Zahnlücken des Hohlrads 3 hineingestrichen wird, ergibt sich auch eine besondere Eignung dieser Zahnradpumpe zur weitgehenden Selbstreinigung.

Die Eingangsdichtwand 5 und somit zumindest auch ein Teil des Planetenträgers 2 können auch körperlich Bestandteil der Schneckenwelle 17 sein, müssen also keine separaten Bauteile sein.

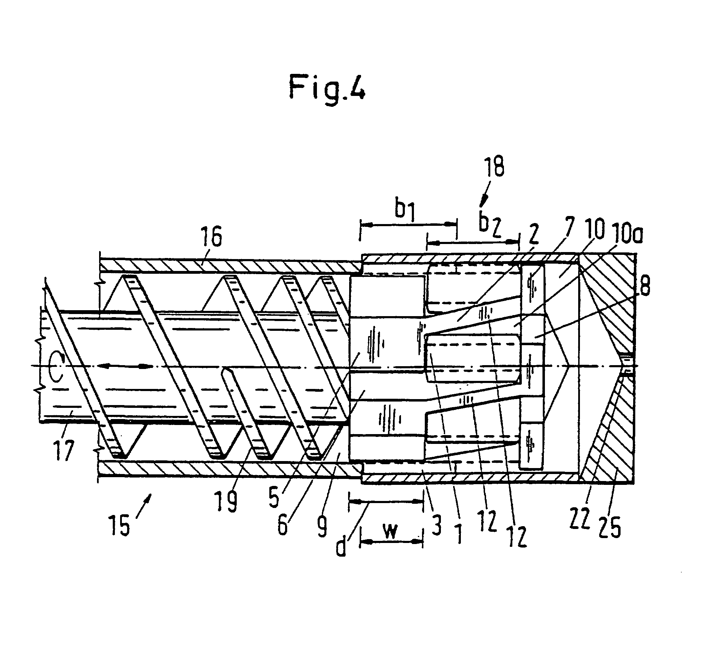

In Fig. 4 ist eine Abwandlung des in den Fig. 1 bis 3d dargestellten Schneckenextruders mit Planetenradpumpe dargestellt. Die grundsätzliche Aufbauweise und Funktion dieses Schneckenextruders entspricht letzterem, so dass insoweit auf die vorstehende Beschreibung verwiesen wird. Im Unterschied hierzu ist jedoch die Schneckenwelle 17 des Schneckenextruders 15 in Fig. 4 zusammen mit dem Planetenträger 2 und der damit verbundenen Eingangsdichtwand 5 sowie Ausgangsdichtwand 7 in axialer Richtung verschieblich, wie dies durch den dick auf der Längsachse des Extruders dargestellten Doppelpfeil angedeutet ist. Die Verzahnungsbreite des Hohlrads 3 ist mit b₁ und die Verzahnungsbreite der Planetenräder 1 mit b₂ bezeichnet. Beide Verzahnungsbreiten b₁, b₂ sind etwa gleich groß, so dass in einer nicht dargestellten Ausgangsstellung, bei der die Schneckenwelle mit dem mechanisch daran gekoppelten Planetenträger 3 nach links verschoben ist (linke Endposition), sich beide Verzahnungsbreiten b₁, b₂ vollständig überdecken. Der gegenüber dieser Ausgangsstellung eingetretene Verschiebeweg der Schneckenwelle 17 und des Planetenträgers 2 ist in Fig. 4 mit w bezeichnet. Somit ist in der gezeigten Stellung (in der Nähe der rechten Endposition) die Verzahnung lediglich über eine Länge b₁ - w im Eingriff. Dementsprechend ist das Fördervolumen der Zahnradpumpe 18 reduziert. Dabei bleibt der an den Dichtbereichen 11 (Fig. 3b, c) vorbeigeführte Teilstrom der Fördermenge völlig unbeeinflusst. Es verändert sich lediglich der Teilstrom, der durch die Verdrängung der in die Zahnlücken des Hohlrads 3 eingreifenden Zähne der Planetenräder 1 hervorgerufene Massenteilstrom. Um zu verhindern, dass durch die axiale Verschiebung des Planetenträgers 3 der Zahnradpumpe 18 eine ungewollte Leckage zwischen dem Druckraum 10 und dem Saugraum 9 im Bereich der Zahnlücken an der linken Seite des Hohlrads 3 entsteht, ist die Dicke der Eingangsdichtwand 5, die mit d bezeichnet ist, erheblich größer als die Dicke der Ausgangsdichtwand 7. Zum Erhalt der Dichtigkeit muss diese Dicke d zumindest geringfügig größer sein als der maximale Verschiebeweg w, damit der Umfang der Eingangsdicht-wand 5 trotz der Verschiebung weiterhin dicht an der glattwandigen Innenseite des Extrudergehäuses 16 oder eines in diesem Bereich fortgesetzten Pumpengehäuses 4 anliegt. Wenn diese Überdeckung der Eingangsdichtwand 5 mit dem Extrudergehäuse 16 nicht gegeben wäre, würde eine Rückströmung aus dem Druckraum 10 durch diejenigen Zahnlücken des Hohlrads 3 entstehen, die gerade nicht mit den entsprechenden Zähnen der Planetenräder 2 im Eingriff stehen. Dieser Effekt der Rückströmung könnte aber auch bewusst erzeugt und gesteuert werden, um die Förderleistung der Pumpe zu regeln. Insofern ist die erhebliche Vergrößerung der Dicke der Eingangsdichtwand 5 nicht zwingend erforderlich, um die Funktionsfähigkeit der Zahnradpumpe 18 trotz Verschiebung des Planetenträgers 3 in axialer Richtung aufrechtzuerhalten. Auf diesem Wege lässt sich die Förderleistung der Zahnradpumpe 18 sogar wesentlich stärker reduzieren, als dies bei der in Fig. 4 dargestellten Ausführungsform möglich ist.

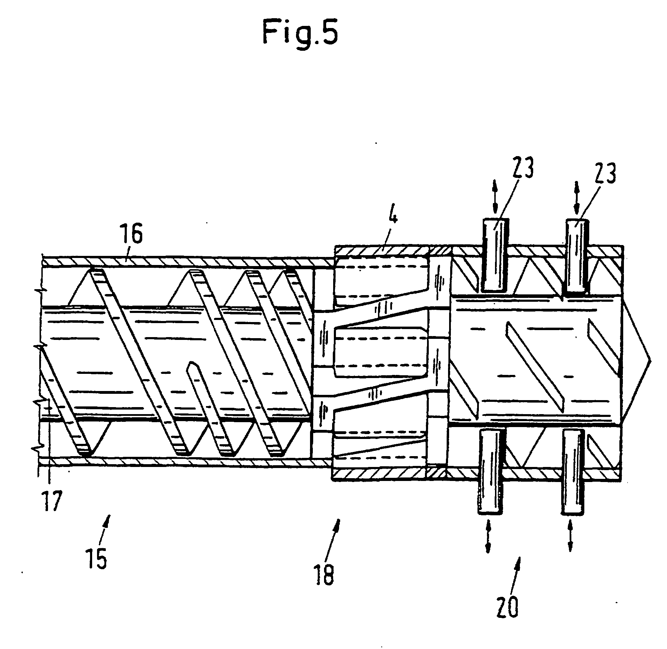

Fig. 5 zeigt eine ähnliche Anordnung von Schneckenextruder 15 mit Zahnradpumpe 18, die lediglich um das Merkmal ergänzt, ist, dass in Förderrichtung, die von links nach rechts geht, hinter der Zahnradpumpe 18 noch ein Stiftzylinderextruderbereich 20 angeschlossen ist, wie er insbesondere zur Verarbeitung von Kautschukmischungen häufig verwendet wird. In das Gehäuse des Stiftzylinderextruderbereichs 20 sind Stifte 23 eingesetzt, die, wie dies durch die Doppelpfeile angedeutet ist, in radialer Richtung auf die Exruderlängsachse angestellt werden können. Die Zahnradpumpe 18 sorgt in diesem Fall dafür, dass am Ende des Stiftzylinderextruderbereichs 20 noch ein ausreichender Druck für die Extrusion des verarbeiteten Materials vorliegt.

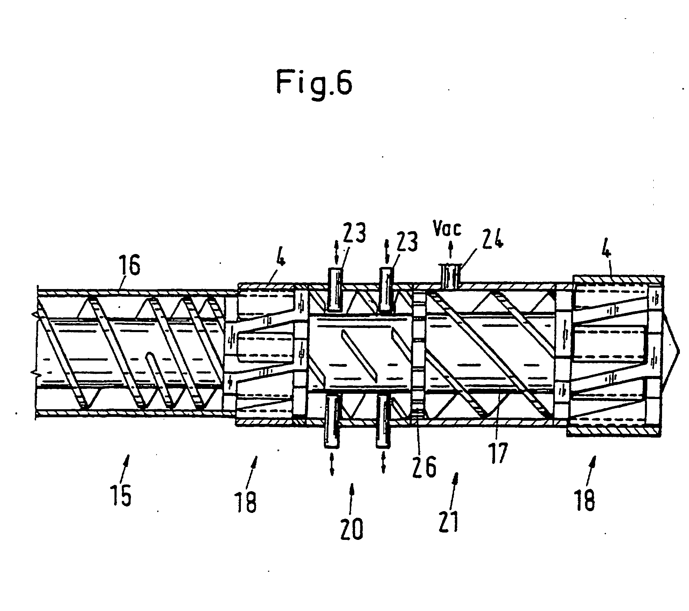

In Fig. 6 ist die Anordnung gemäß Fig. 5 noch um zwei weitere Abschnitte erweitert. An den Stiftzylinderextruderbereich 20 schließt sich in Förderrichtung nämlich zunächst ein Vakuumentgasungsbereich 21 mit einem Vakuumanschluss 24 und einem eingangsseitigen Blister 26 sowie mit einer 4-gängigen Schneckenwelle 17 an, während am Extrusionsende, also am rechten Ende der Anordnung noch eine zweite Zahnradpumpe 18 angeschlossen ist, die den zur Extrusion gewünschten Förderdruck der verarbeiteten Schmelze erzeugt. Bei dieser Anordnung wird durch volumetrisches Fördern durch die beiden Zahnradpumpen 18 eine Entkopplung von Aufstaulänge und Extrusionsdruck ermöglicht, so dass ein Überfluten der Vakuumabsaugung im Vakuumentgasungsbereich 21 vermieden werden kann.

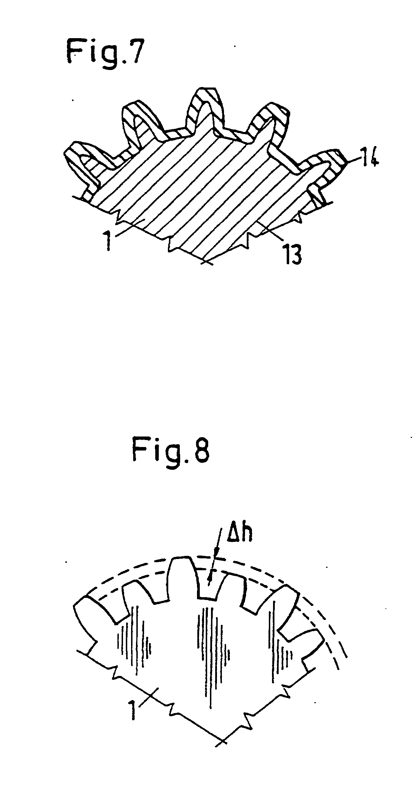

Für die Verzahnung des Hohlrads 3 (oder im Falle einer umgekehrten Pumpenanordnung die Verzahnung des Sonnenrads) und/oder die Verzahnung der Planetenräder 1 kann eine Ausführungsform gewählt werden, wie sie in Fig. 7 exemplarisch und schematisch als Teilschnittbild eines Planetenrads 1 dargestellt ist. Dieses Planetenrad 1 besitzt einen Zahnradgrundkörper 13, der vorzugsweise aus Metall (z.B. Stahl) gefertigt ist und in Bezug auf die Verzahnung fertigungstechnisch relativ grob toleriert sein kann. Die einzelnen Zähne sind wesentlich kleiner und die Zahnlücken wesentlich größer als dies für die Endform des Planetenrads 1 angestrebt wird. Diese Endform wird durch eine Umhüllung aus einem weichelastischen Material 14 (z.B. Gummi oder ein thermoplastisches Elastomer) hergestellt. Wegen der guten Verformbarkeit dieses Materials braucht die Formgenauigkeit des fertigen Planetenrads 1 nicht so hoch zu sein, wie dies bei einem starren Werkstoff der Fall sein müsste, da Übermaße der Zahngeometrie durch Verformung während des Zahneingriffs kompensiert werden können. Wegen der geringeren Anforderungen an die Formgenauigkeit lässt sich der Fertigungsaufwand für die Verzahnung entsprechend reduzieren. Auf der anderen Seite können auf diese Weise aber auch besonders hohe Anforderungen an die Dichtigkeit der im Eingriff befindlichen Verzahnung hinsichtlich eines ungewollten Materialrückflusses erfüllt werden.

In Fig. 8 ist eine weitere Variation hinsichtlich der einsetzbaren Verzahnung wiederum am Beispiel eines Planetenrads 1, das als Ausschnitt dargestellt ist, schematisch angedeutet. Dieses Planetenrad 1 weist alternierend unterschied hohe Zähne auf. Der Unterschied in der Zahnhöhe ist mit Δh bezeichnet. Jeder zweite Zahn hat hierbei eine geringere Zahnhöhe als die normale Zahnhöhe. Alternativ könnten auch mehrere Zähne hintereinander jeweils die gleiche Höhe aufweisen, so dass die Zahnhöhe über den Umfang sich bereichsweise verändern würde. Es könnten auch Planetenräder 1 eingesetzt werden, die in sich jeweils gleiche Zahnhöhe aber untereinander unterschiedliche Zahnhöhen aufweisen. Damit könnte ein besonderer Effekt erreicht werden, nämlich eine Kompaktierung des in einer Zahnlücke des Hohlrads 3 befindlichen Materials, das von einem Zahn mit verringerter Zahnhöhe beaufschlagt und dadurch höchstens teilweise aus der Zahnlücke in den Druckraum 10 hineingefördert wird. Durch einen beim weiteren Umlauf des Planetenträgers in eine solche Zahnlücke eindringenden anderen Zahn mit normaler Zahnhöhe könnte dann dieses kompaktierte Material in den Druckraum gefördert werden.

Die erfindungsgemäß vorgeschlagene Bauweise einer Zahnradpumpe gewährleistet, dass beim Leerfahren eines mit einer solchen Zahnradpumpe ausgerüsteten Extruders praktisch das gesamte Schmelzenmaterial aus dem Extruder und der damit verbundenen Zahnradpumpe hinausgefördert wird, da zur Sicherstellung der Materialeinspeisung in die Zahnradpumpe praktisch kein Vordruck erforderlich ist. Auf diese Weise lassen sich in den meisten Fällen aufwendige Reinigungsarbeiten beim Wechseln des zu verarbeitenden Materials vermeiden. Es kommt hinzu, dass wegen der Aufteilung der Materialströme an jedem Planetenrad in zwei kleinere Teilströme diese Zahnradpumpe eine erheblich bessere Mischungswirkung auf das zu verarbeitende Material hat, als dies bei einer üblichen als Schmelzepumpe eingesetzten Zahnradpumpe in der Bauweise eines Stirnradgetriebes der Fall ist. Dort werden lediglich zwei Materialteilströme erzeugt und wieder zusammengeführt. Bei den in den Figuren dargestellten Zahnradpumpen, die jeweils mit vier Planetenräder ausgestattet sind, werden acht Teilströme im Schmelzenfluss erzeugt und wieder zusammengeführt. Dadurch wird eine signifikant bessere Materiaimischung gewährleistet. Durch eine einfache mechanische Kopplung des Planetenträgers mit der Schneckenwelle eines Extruders kann auf einen separaten motorischen Antrieb der Zahnradpumpe vollständig verzichtet werden. Dennoch ist eine Regelung der Förderleistung der Zahnradpumpe möglich, wenn diese auf eine axiale Verstellung eingerichtet ist, wie dies vorstehend beschrieben wurde.

### Bezugszeichenliste

- 1: Planetenrad
- 2: Planetenträger
- 3: Hohlrad
- 4: Pumpengehäuse
- 5: Eingangsdichtwand
- 6: Eintrittsöffnung
- 7: Ausgangsdichtwand
- 8: Austrittsöffnung
- 9: Saugraum
- 9a: Saugraumelement
- 10: Druckraum
- 10a: Druckraumelement
- 11: Dichtbereich
- 12: Trennwand
- 13: Zahnradgrundkörper
- 14: weichelastische Umhüllung
- 15: Schneckenextruder
- 16: Extrudergehäuse
- 17: Schneckenwelle
- 18: Zahnradpumpe
- 19: Förderende
- 20: Stiftzylinderextruderbereich
- 21: Vakuumentgasungsbereich
- 22: Extruderaustritt
- 23: Verstellbarer Stift
- 24: Vakuumanschluß
- 25: Kopfstück
- 26: Blister
- b₁: Verzahnungsbreite Hohlrad
- b₂: Verzahnungsbreite Planetenrad
- w: Verschiebeweg
- d: Dicke Eingangsdichtwand
- Δh: Unterschied der Zahnhöhe

## Patentansprüche

1. Schneckenextruder - Zahnradpumpen - Anordnung für hochviskose Medien, insbesondere für Kunststoffschmelzen und Kautschukmischungen, mit einer oder mehreren Schneckenwellen (17) sowie einer mechanisch mit der oder den Schneckenwelle(n) antriebsmäßig gekoppelten Zahnradpumpe (18), deren Pumpengehäuse (4) Bestandteil des Gehäuses (16) des Schneckenextruders (15) ist oder unmittelbar daran angeschlossen ist,
- mit einem mit mindestens einem drehbar gelagerten Planetenrad (1) bestückten Planetenträger (2),
- mit zwei weiteren Funktionselementen, die mit dem mindestens einen Planetenrad (1) im Sinne eines Sonnenrads bzw. eines Hohlrads (3) zusammenwirken,
- mit einem den Planetenträger (2) umgebenden Pumpengehäuse (4),
- mit einer Eingangsdichtwand (5), die mit dem Planetenträger (2) drehfest verbunden ist und mindestens eine Eintrittsöffnung (6) für das zu fördemde Medium aufweist,
- mit einer Ausgangsdichtwand (7), die mit dem Planetenträger (2) drehfest verbunden ist und mindestens einer Austrittsöffnung (8) für das zu fördernde Medium aufweist und
- und mit einem Saugraum (9) und einem Druckraum (10), die von dem Pumpengehäuse (4) umschlossen und gegeneinander abgedichtet sind, wobei der Saugraum (9) in Förderrichtung vor der Eingangsdichtwand (5) angeordnet ist sich durch die mindestens eine Eintrittsöffnung (6) hindurch in mindestens ein Saugraumelement (9a) entlang des mindestens einen Planetenrads (1) bis zu der Ausgangsdichtwand (7) erstreckt und wobei der Druckraum (10) in Förderrichtung hinter der Ausgangsdichtwand (7) angeordnet ist,
- wobei jeweils nur eines der beiden als Sonnenrad oder Hohlrad (3) wirkenden Funktionselemente eine mit dem mindestens einen Planetenrad (1) kämmende Verzahnung aufweist und das andere Funktionselement mindestens einen Dichtbereich (11) aufweist, der glattwandig und über einen Teil des Umfangs und über die Länge des mindestens einen Planetenrads (1) gleitbar dichtend anliegend ausgeführt ist,
- wobei das den mindestens einen Dichtbereich (11) aufweisende andere Funktionselement drehfest mit dem Planetenträger (2) verbunden ist und
- dass zur Trennung des mindestens einen Saugraumelements (9) von dem mindestens einen Druckraumelement (10a) in Umfangsrichtung versetzt zu dem mindestens einen Planetenrad (1) mindestens eine sich von der Eingangsdichtwand (5) bis zur Ausgangsdichtwand (7) erstreckende Trennwand (12) angeordnet ist, die mit dem den mindestens einen glattwandigen Dichtbereich (11) aufweisenden anderen Funktionselement drehfest und dichtend verbunden ist und sich in radialer Richtung bis zum Kopfkreis der Verzahnung des die Verzahnung aufweisenden Funktionselements erstreckt.

2. Schneckenextruder - Zahnradpumpen - Anordnung nach Anspruch 1,
**dadurch gekennzeichnet,**
**dass** sich der Druckraum (10) durch die mindestens eine Austrittsöffnung (8) hindurch in mindestens ein Druckraumelement (10a) entlang des mindestens einen Planetenrads (1) bis zu der Eingangsdichtwand (5) erstreckt.

3. Schneckenextruder - Zahnradpumpen - Anordnung nach Anspruch 1,
**dadurch gekennzeichnet,**
**dass** die mindestens eine Trennwand (12) jeweils über die gesamte axiale Länge des mindestens einen Planetenrads (1) großflächig über den Umfang des Planetenrads (1) an dessen Verzahnung dichtend anliegt.

4. Schneckenextruder - Zahnradpumpen - Anordnung nach einem der Ansprüche 1 bis 3,
**dadurch gekennzeichnet,**
**dass** jeweils mindestens zwei, insbesondere jeweils mindestens vier Planetenräder (1), Trennwände (12), Eintritts- (6) und Austrittsöffnungen (8) vorgesehen sind.

5. Schneckenextruder - Zahnradpumpen - Anordnung nach einem der Ansprüche 1 bis 4,
**dadurch gekennzeichnet,**
**dass** die Verzahnung des mindestens einen Planetenrads (1) und des verzahnten Funktionselements als Schrägverzahnung ausgeführt ist.

6. Schneckenextruder - Zahnradpumpen - Anordnung nach Anspruch 5,
**dadurch gekennzeichnet,**
**dass** die mindestens eine Trennwand (12) entsprechend der Schrägverzahnung in axialer Richtung wendelförmig verläuft.

7. Schneckenextruder - Zahnradpumpen - Anordnung nach einem der Ansprüche 1 bis 6,
**dadurch gekennzeichnet,**
**dass** die mindestens eine Trennwand (12) einstückig mit dem den mindestens einen Dichtbereich (11) aufweisenden Funktionselement ausgebildet ist.

8. Schneckenextruder - Zahnradpumpen - Anordnung nach einem der Ansprüche 1 bis 7,
**dadurch gekennzeichnet,**
**dass** das Hohlrad (3) mit der Verzahnung und das dem Sonnenrad entsprechende Funktionsteil mit dem mindestens einen Dichtbereich (11) versehen ist.

9. Schneckenextruder - Zahnradpumpen - Anordnung nach Anspruch 8,
**dadurch gekennzeichnet,**
**dass** der Planetenträger (2) und das dem Sonnenrad entsprechende Funktionsteil einstückig ausgebildet sind.

10. Schneckenextruder - Zahnradpumpen - Anordnung nach Anspruch 8 oder 9,
**dadurch gekennzeichnet,**
**dass** die Eingangsdichtwand (5) oder die Ausgangsdichtwand (7) einstückig mit dem Planetenträger (2) ausgebildet ist.

11. Schneckenextruder - Zahnradpumpen - Anordnung nach einem der Ansprüche 8 bis 10
**dadurch gekennzeichnet,**
**dass** das Hohlrad (3) einstückig mit dem das Hohlrad (3) umgebenden Teil des Pumpengehäuses (4) ausgebildet ist.

12. Schneckenextruder - Zahnradpumpen - Anordnung nach einem der Ansprüche 8 bis 11,
**dadurch gekennzeichnet,**
**dass** der Außendurchmesser der Eingangsdichtwand (5) ungleich, insbesondere kleiner ist als der Außendurchmesser der Ausgangsdichtwand (7).

13. Schneckenextruder - Zahnradpumpen - Anordnung nach einem der Ansprüche 8 bis 12,
**dadurch gekennzeichnet,**
**dass** zur Veränderbarkeit des Fördervolumens der Zahnradpumpe (18) der Planetenträger (2) zusammen mit dem dem Sonnenrad entsprechenden Funktionsteil und der Eingangs- (5) und der Ausgangsdichtwand (7) innerhalb des Pumpengehäuses (4) axial gegenüber dem Hohlrad (3) um einen Verschiebeweg w verschieblich angeordnet ist.

14. Schneckenextruder - Zahnradpumpen - Anordnung nach Anspruch 13,
**dadurch gekennzeichnet,**
**dass** die Dicke d (in Verschieberichtung gesehen) der Eingangsdichtwand (5) größer ist als der maximale Verschiebeweg w.

15. Schneckenextruder - Zahnradpumpen - Anordnung nach einem der Ansprüche 1 bis 14,
**dadurch gekennzeichnet,**
**dass** das mindestens eine Planetenrad (1) und/oder das die mit dem mindestens einen Planetenrad (1) kämmende Verzahnung aufweisende Funktionsteil zumindest im oberflächennahen Bereich seiner Verzahnung weich-elastisch ausgeführt ist/sind.

16. Schneckenextruder - Zahnradpumpen - Anordnung nach Anspruch 15,
**dadurch gekennzeichnet,**
**dass** die Verzahnung jeweils durch einen fertigungstechnisch grob tolerierten metallischen Zahnradgrundkörper (13) mit einer elastischen Umhüllung (14), insbesondere einer Umhüllung aus Gummi oder einem thermoplastischen Elastomer, im Verzahnungsbereich gebildet wird.

17. Schneckenextruder - Zahnradpumpen - Anordnung nach einem der Ansprüche 1 bis 16,
**dadurch gekennzeichnet,**
**dass** die Verzahnung des Hohlrads (3) oder des mindestens einen Planetenrads (1) alternierend oder abschnittsweise mit Zähnen unterschiedlicher Höhe ausgeführt ist oder im Falle mehrerer Planetenräder (1) die Zähne mindestens eines dieser Planetenräder (1) eine andere Zahnhöhe aufweisen als ein anderes Planetenrad.

18. Schneckenextruder - Zahnradpumpen - Anordnung nach einem der Ansprüche 1 - 17,
**dadurch gekennzeichnet,**
**dass** die Gangzahl am Förderende (19) der Schneckenwelle/-wellen (17) jeweils gleich der Zahl der Planetenräder (1) der daran angeschlossenen Zahnradpumpe (18) ist.

19. Schneckenextruder - Zahnradpumpen - Anordnung nach Anspruch 18,
**dadurch gekennzeichnet,**
**dass** die Gangzahl des vor dem Förderende (19) liegenden Abschnitts der Schneckenwelle (17) jeweils halb so groß ist wie die Gangzahl am Förderende (19).

20. Schneckenextruder - Zahnradpumpen - Anordnung nach einem der Ansprüche 1 bis 19,
**dadurch gekennzeichnet,**
**dass** die Verzahnung in der Zahnradpumpe (18) schrägverzahnt ausgeführt und der Neigung der Wendelung der Gänge der Schneckenwelle (17) - bezogen auf die Förderrichtung des Schneckenextruders (15) - jeweils entgegengesetzt ist.

21. Schneckenextruder - Zahnradpumpen - Anordnung nach einem der Ansprüche 1 bis 20,
**dadurch gekennzeichnet,**
**dass** die Schneckenwelle (17) jeweils zusammen mit dem Planetenträger (2) und dem dem Hohlrad entsprechenden Funktionsteil sowie der Eingangs- und der Ausgangsdichtwand (5, 7) axial verschieblich angeordnet ist.

22. Schneckenextruder - Zahnradpumpen - Anordnung nach einem der Ansprüche 1 bis 21,
**dadurch gekennzeichnet,**
**dass** in Förderrichtung hinter der Zahnradpumpe (18) ein Stiftzylinderextruderbereich (20) angeordnet ist.

23. Schneckenextruder - Zahnradpumpen - Anordnung nach Anspruch 22,
**dadurch gekennzeichnet,**
**dass** auf einer Schneckenwelle (17) axial hintereinander zwei Zahnradpumpen (18) angeordnet sind, wobei die in Förderrichtung zweite Zahnradpumpe (18) unmittelbar nach einem Vakuumentgasungsbereich (21) angeordnet ist, der sich an den Stiftzylinderextruderbereich (20) anschließt.

## Claims

1. A screw extruder/gear pump arrangement for highly viscous media, in particular for plastics melts and rubber mixes, comprising one or more screw shafts (17) and also a gear pump (18) mechanically coupled drive-wise to the screw shaft(s), the housing (4) of which pump is a component of the housing (16) of the screw extruder (15) or is attached directly thereto,
- comprising a planet carrier (2) equipped with at least one rotatably mounted planet wheel (1),
- comprising two further functional elements which cooperate with the at least one planet wheel (1) in the manner of a sun wheel or an internal gear (3),
- comprising a pump housing (4) surrounding the planet carrier (2),
- comprising an inlet sealing wall (5) which is connected to the planet carrier (2) in a manner resistant to rotation and has at least one entry opening (6) for the medium to be conveyed,
- comprising an outlet sealing wall (7) which is connected to the planet carrier (2) in a manner resistant to rotation and has at least one exit opening (8) for the medium to be conveyed,
- and comprising a suction chamber (9) and a pressure chamber (10) which are surrounded by the pump housing (4) and are sealed off from each other, the suction chamber (9) being located in the direction of conveyance before the inlet sealing wall (5), extending through the at least one entry opening (6) into at least one suction-chamber element (9a) along the at least one planet wheel (1) as far as the outlet sealing wall (7) and the pressure chamber (10) being located in the direction of conveyance after the outlet sealing wall (7),
- in each case only one of the two functional elements acting as a sun wheel or internal gear (3) having teeth which mesh with the at least one planet wheel (1) and the other functional element having at least one sealing region (11) which is smooth-walled and designed to lie in sliding, sealing manner over part of the periphery and over the length of the at least one planet wheel (1),
- the other functional element which bears the at least one sealing region (11) being connected in a manner resistant to rotation to the planet carrier (2) and
- that to separate the at least one suction-chamber element (9) from the at least one pressure-chamber element (10a) at least one partition (12) extending from the inlet sealing wall (5) to the outlet sealing wall (7) is arranged offset in the peripheral direction to the at least one planet wheel (1), which partition is connected in a manner resistant to rotation and in sealing fashion to the other functional element which bears at least the one smooth-walled sealing region (11) and extends in the radial direction to the addendum circle of the teeth of the functional element bearing the teeth.

2. A screw extruder/gear pump arrangement according to Claim 1, **characterised in that** the pressure chamber (10) extends through the at least one exit opening (8) into at least one pressure-chamber element (10a) along the at least one planet wheel (1) as far as the inlet sealing wall (5).

3. A screw extruder/gear pump arrangement according to Claim 1, **characterised in that** the at least one partition (12) in each case lies in sealing fashion over the entire axial length of the at least one planet wheel (1) over a large area over the periphery of the planet wheel (1) on the teeth thereof.

4. A screw extruder/gear pump arrangement according to one of Claims 1 to 3, **characterised in that** in each case at least two, in particular in each case at least four, planet wheels (1), partitions (12), entry openings (6) and exit openings (8) are provided.

5. A screw extruder/gear pump arrangement according to one of Claims 1 to 4, **characterised in that** the teeth of the at least one planet wheel (1) and of the toothed functional element are in the form of oblique teeth.

6. A screw extruder/gear pump arrangement according to Claim 5, **characterised in that** the at least one partition (12) extends in the form of a helix in the axial direction, corresponding to the oblique teeth.

7. A screw extruder/gear pump arrangement according to one of Claims 1 to 6, **characterised in that** the at least one partition (12) is formed of one piece with the functional element bearing the at least one sealing region (11).

8. A screw extruder/gear pump arrangement according to one of Claims 1 to 7, **characterised in that** the internal gear (3) is provided with the teeth and the functional part corresponding to the sun wheel is provided with the at least one sealing region (11).

9. A screw extruder/gear pump arrangement according to Claim 8, **characterised in that** the planet carrier (2) and the functional part corresponding to the sun wheel are formed of one piece.

10. A screw extruder/gear pump arrangement according to Claim 8 or 9, **characterised in that** the inlet sealing wall (5) or the outlet sealing wall (7) is formed of one piece with the planet carrier (2).

11. A screw extruder/gear pump arrangement according to one of Claims 8 to 10, **characterised in that** the internal gear (3) is formed of one piece with that part of the pump housing (4) which surrounds the internal gear (3).

12. A screw extruder/gear pump arrangement according to one of Claims 8 to 11, **characterised in that** the external diameter of the inlet sealing wall (5) is unequal to, in particular smaller than, the external diameter of the outlet sealing wall (7).

13. A screw extruder/gear pump arrangement according to one of Claims 8 to 12, **characterised in that** in order to be able to change the volume throughput of the gear pump (18) the planet carrier (2) together with the functional part corresponding to the sun wheel and the inlet sealing wall (5) and the outlet sealing wall (7) is located within the pump housing (4) so as to be axially displaceable by a displacement path w relative the internal gear (3).

14. A screw extruder/gear pump arrangement according to Claim 13, **characterised in that** the thickness d (viewed in the direction of displacement) of the inlet sealing wall (5) is greater than the maximum displacement path w.

15. A screw extruder/gear pump arrangement according to one of Claims 1 to 14, **characterised in that** the at least one planet wheel (1) and/or the functional part bearing teeth which mesh with the at least one planet wheel (1) is/are made to be flexible at least in the region of its/their teeth which is close to the surface.

16. A screw extruder/gear pump arrangement according to Claim 15, **characterised in that** the teeth in each case are formed by a metallic gear wheel base body (13) of a wide production tolerance, with an elastic sheath (14), in particular a sheath of rubber or a thermoplastic elastomer, in the tooth region.

17. A screw extruder/gear pump arrangement according to one of Claims 1 to 16, **characterised in that** the teeth of the internal gear (3) or of the at least one planet wheel (1) are designed alternating or in sections with teeth of different heights, or in the case of a plurality of planet wheels (1) the teeth of at least one of these planet wheels (1) are of a different height than those of another planet wheel.

18. A screw extruder/gear pump arrangement according to one of Claims 1 to 17, **characterised in that** the number of threads at the delivery end (19) of the screw shaft(s) (17) in each case is identical to the number of planet wheels (1) of the gear pump (18) attached thereto.

19. A screw extruder/gear pump arrangement according to Claim 18, **characterised in that** the number of threads of the section of the screw shaft (17) located before the delivery end (19) in each case is half as large as the number of threads at the delivery end (19).

20. A screw extruder/gear pump arrangement according to one of Claims 1 to 19, **characterised in that** the teeth in the gear pump (18) are oblique teeth and the inclination of the helix of the threads of the screw shaft (17) - relative to the direction of conveyance of the screw extruder (15) -is opposed in each case.

21. A screw extruder/gear pump arrangement according to one of Claims 1 to 20, **characterised in that** the screw shaft (17) in each case together with the planet carrier (2) and the functional part corresponding to the internal gear and also the inlet and outlet sealing walls (5, 7) are arranged to be axially displaceable.

22. A screw extruder/gear pump arrangement according to one of Claims 1 to 21, **characterised in that** a pin-lined barrel extruder region (20) is located in the direction of conveyance after the gear pump (18).

23. A screw extruder/gear pump arrangement according to Claim 22, **characterised in that** two gear pumps (18) are arranged axially in series on a screw shaft (17), the second gear pump (18) in the direction of conveyance being located immediately after a vacuum degassing region (21) which adjoins the pin-lined barrel extruder region (20).

## Revendications

1. Agencement extrudeuse à vis - pompe à engrenages pour fluides très visqueux, en particulier pour matières plastiques en fusion et mélanges de caoutchouc, ayant un ou plusieurs arbres de vis (17) ainsi qu'une pompe à engrenages (18) couplée mécaniquement en entraînement à l'arbre de vis ou aux arbres de vis, dont le carter de pompe (4) fait partie intégrante du carter (16) de l'extrudeuse à vis (15) ou est raccordé directement à ce dernier,
- avec une cage de transmission planétaire (2) équipée d'au moins une roue planétaire (1) montée de manière à pouvoir tourner,
- avec deux autres éléments fonctionnels qui coopèrent avec au moins une roue planétaire (1) au sens d'une roue solaire ou d'une couronne de train planétaire (3),
- avec un carter de pompe (4) entourant la cage de transmission planétaire (2),
- avec une paroi étanche d'entrée (5) reliée fixement à la cage de transmission planétaire (2) et présentant au moins une ouverture d'admission (6) pour le fluide à transporter,
- avec une paroi étanche de sortie (7) reliée fixement à la cage de transmission planétaire (2) et présentant au moins une ouverture de sortie (8) pour le fluide à transporter et
- avec une chambre d'aspiration (9) et une chambre de pression (10) qui sont incluses dans le carter de pompe (4) et étanches l'une par rapport à l'autre, la chambre d'aspiration (9) étant agencée en amont de la paroi étanche d'entrée (5) dans le sens de transport et s'étendant à travers au moins une ouverture d'admission (6) dans au moins un élément de chambre d'aspiration (9a) le long d'au moins une roue planétaire (1) jusqu'à la paroi étanche de sortie (7) et la chambre de pression (10) étant agencée en aval de la paroi étanche de sortie (7) dans le sens de transport,
- un seul des deux éléments fonctionnels faisant office de roue solaire ou de couronne de train planétaire (3) présentant une denture s'engrenant dans au moins une roue planétaire (1) et l'autre élément fonctionnel présentant au moins une zone étanche (11) réalisée à paroi lisse et adjacente de manière à faire étanchéité par glissement sur une partie du pourtour et sur la longueur d'au moins une roue planétaire (1),
- l'autre élément fonctionnel présentant au moins une zone étanche (11) étant relié fixement à la cage de transmission planétaire (2) et
- pour séparer au moins un élément de chambre d'aspiration (9) d'au moins un élément de chambre de pression (10a), il est agencé de manière décalée par rapport à au moins une roue planétaire (1) dans la direction circonférentielle au moins une cloison de séparation (12) s'étendant de la paroi étanche d'entrée (5) jusqu'à la paroi étanche de sortie (7), laquelle cloison de séparation est reliée fixement et de manière à faire étanchéité à l'autre élément fonctionnel présentant au moins une zone étanche (11) à paroi lisse et s'étend dans la direction radiale jusqu'au cercle de tête de la denture de l'élément fonctionnel présentant la denture.

2. Agencement extrudeuse à vis - pompe à engrenages selon la revendication 1,
**caractérisé en ce que** la chambre de pression (10) s'étend à travers au moins une ouverture de sortie (8) dans au moins un élément de chambre de pression (10a) le long d'au moins une roue planétaire (1) jusqu'à la paroi étanche d'entrée (5).

3. Agencement extrudeuse à vis - pompe à engrenages selon la revendication 1,
**caractérisé en ce qu'**au moins une cloison de séparation (12), à chaque fois sur l'ensemble de la longueur axiale d'au moins une roue planétaire (1) et sur une grande surface du pourtour de la roue planétaire (1), est adjacente à la denture de celle-ci de façon à faire étanchéité.

4. Agencement extrudeuse à vis - pompe à engrenages selon l'une des revendications 1 à 3,
**caractérisé en ce qu'**à chaque fois au moins deux, en particulier à chaque fois au moins quatre roues planétaires (1), cloisons de séparation (12), ouvertures d'admission (6) et de sortie (8) sont prévues.

5. Agencement extrudeuse à vis - pompe à engrenages selon l'une des revendications 1 à 4,
**caractérisé en ce que** la denture d'au moins une roue planétaire (1) et de l'élément fonctionnel denté est réalisée sous forme de denture hélicoïdale.

6. Agencement extrudeuse à vis - pompe à engrenages selon la revendication 5,
**caractérisé en ce qu'**au moins une cloison de séparation (12) s'étend en forme d'hélice dans la direction axiale, conformément à la denture hélicoïdale.

7. Agencement extrudeuse à vis - pompe à engrenages selon l'une des revendications 1 à 6,
**caractérisé en ce qu'**au moins une cloison de séparation (12) est réalisée d'une seule pièce avec l'élément fonctionnel présentant au moins une zone étanche (11).

8. Agencement extrudeuse à vis - pompe à engrenages selon l'une des revendications 1 à 7,
**caractérisé en ce que** la couronne de train planétaire (3) est pourvue de la denture et la partie fonctionnelle correspondant à la roue solaire d'au moins une zone d'étanche (11).

9. Agencement extrudeuse à vis - pompe à engrenages selon la revendication 8,
**caractérisé en ce que** la cage de transmission planétaire (2) et la partie fonctionnelle correspondant à la roue solaire sont réalisées d'une seule pièce.

10. Agencement extrudeuse à vis - pompe à engrenages selon la revendication 8 ou 9,
**caractérisé en ce que** la paroi étanche d'entrée (5) ou la paroi étanche de sortie (7) est réalisée d'une seule pièce avec la cage de transmission planétaire (2).

11. Agencement extrudeuse à vis - pompe à engrenages selon l'une des revendications 8 à 10,
**caractérisé en ce que** la couronne de train planétaire (3) est réalisée d'une seule pièce avec la partie du carter de pompe (4) entourant la couronne de train planétaire (3).

12. Agencement extrudeuse à vis - pompe à engrenages selon l'une des revendications 8 à 11,
**caractérisé en ce que** le diamètre extérieur de la paroi étanche d'entrée (5) n'est pas égal, en particulier est inférieur, au diamètre extérieur de la paroi étanche de sortie (7).

13. Agencement extrudeuse à vis - pompe à engrenages selon l'une des revendications 8 à 12,
**caractérisé en ce que**, afin de pouvoir faire varier le volume de refoulement de la pompe à engrenages (18), la cage de transmission planétaire (2) en même temps que la partie fonctionnelle correspondant à la roue solaire et la paroi étanche d'entrée (5) et de sortie (7) est agencée à l'intérieur du carter de pompe (4) de manière mobile axialement par rapport à la couronne de train planétaire (3) d'une course de translation w.

14. Agencement extrudeuse à vis - pompe à engrenages selon la revendication 13,
**caractérisé en ce que** l'épaisseur d (vue dans le sens de translation) de la paroi étanche d'entrée (5) est supérieure à la course de translation w maximale.

15. Agencement extrudeuse à vis - pompe à engrenages selon l'une des revendications 1 à 14,
**caractérisé en ce qu'**au moins une roue planétaire (1) et/ou la partie fonctionnelle présentant la denture s'engrenant dans au moins une roue planétaire (1) est/sont réalisée(s) souple(s) et élastique(s) au moins dans la zone proche de la superficie de sa (leur) denture.

16. Agencement extrudeuse à vis - pompe à engrenages selon la revendication 15,
**caractérisé en ce que** la denture est formée dans la zone de denture à chaque fois par un corps de base d'engrenage (13) métallique fabriqué avec une large tolérance avec une enveloppe élastique (14), en particulier une enveloppe en caoutchouc ou dans un élastomère thermoplastique.

17. Agencement extrudeuse à vis - pompe à engrenages selon l'une des revendications 1 à 16,
**caractérisé en ce que** la denture de la couronne de train planétaire (3) ou d'au moins une roue planétaire (1) est réalisée en alternance ou par endroits avec des dents de hauteur différente ou, dans le cas de plusieurs roues planétaires (1), les dents d'au moins l'une de ces roues planétaires (1) présentent une hauteur de dent différente de celle d'une autre roue planétaire.

18. Agencement extrudeuse à vis - pompe à engrenages selon l'une des revendications 1 à 17,
**caractérisé en ce que** le nombre de spires à l'extrémité de transport (19) de l'arbre ou des arbres de vis (17) est à chaque fois égal au nombre des roues planétaires (1) de la pompe à engrenages (18) raccordée.

19. Agencement extrudeuse à vis - pompe à engrenages selon la revendication 18,
**caractérisé en ce que** le nombre de spires de la partie de l'arbre de vis (17) située avant l'extrémité de transport (19) est à chaque fois moitié moins important que le nombre de spires à l'extrémité de transport (19).

20. Agencement extrudeuse à vis - pompe à engrenages selon l'une des revendications 1 à 19,
**caractérisé en ce que** la denture est réalisée de manière hélicoïdale dans la pompe à engrenages (18) et l'inclinaison de l'hélice des spires de l'arbre de vis (17) - rapportée au sens de transport de l'extrudeuse à vis (15) - est à chaque fois inverse.

21. Agencement extrudeuse à vis - pompe à engrenages selon l'une des revendications 1 à 20,
**caractérisé en ce que** l'arbre de vis (17), à chaque fois en même temps que la cage de transmission planétaire (2) et la partie fonctionnelle correspondant à la couronne de train planétaire ainsi que la paroi étanche d'entrée et de sortie (5, 7), est agencé de manière mobile axialement.

22. Agencement extrudeuse à vis - pompe à engrenages selon l'une des revendications 1 à 21,
**caractérisé en ce qu'**une zone d'extrudeuse à cylindre fileté (20) est agencée en aval de la pompe à engrenages (18) dans le sens de transport.

23. Agencement extrudeuse à vis - pompe à engrenages selon la revendication 22,
**caractérisé en ce que**, sur un arbre de vis (17), deux pompes à engrenages (18) sont agencées axialement l'une derrière l'autre, la seconde pompe à engrenages (18) dans le sens de transport étant agencée directement après une zone de dégazage sous vide (21) qui suit la zone d'extrudeuse à cylindre fileté (20).
